# EUROPÄISCHE PATENTANMELDUNG

(11) **EP 4 059 356 A1**
(43) Veröffentlichungstag der Anmeldung: **21.09.2022**
(21) Anmeldenummer: 21162834.2
(22) Anmeldetag: 16.03.2021
(51) Int. Cl.: A23N 12/10, A47J 37/04

(54) **RÖSTVORRICHTUNG**

(71) Anmelder: van der Vliet, Albert, 1831BA Koedijk (NL)
(72) Erfinder: van der Vliet, Albert, 1831BA Koedijk (NL)
(74) Vertreter: Schneider, Sascha

(57) **Zusammenfassung**

Die vorliegende Erfindung betrifft eine Röstvorrichtung.

## Beschreibung

Die vorliegende Erfindung betrifft eine Röstvorrichtung. Herkömmliche Röstvorrichtungen arbeiten beispielsweise mit Heißluftanlagen und benötigen daher sehr viel Platz, sind sehr ineffizient, da viel Energie ungenutzt bleibt, und sind sehr aufwendig zu betreiben.

Es ist daher die Aufgabe der vorliegenden Erfindung, eine Röstvorrichtung bereitzustellen, die die Nachteile des Stands der Technik nicht aufweist.

Diese Aufgabe wird mit den Merkmalen des Patentanspruchs 1 gelöst. Vorteilhafte Weiterbildungen der Erfindung sind in den Unteransprüchen angegeben. In den Rahmen der Erfindung fallen auch sämtliche Kombinationen aus zumindest zwei von in der Beschreibung, den Ansprüchen und/oder den Figuren angegebenen Merkmalen. Bei angegebenen Wertebereichen sollen auch innerhalb der genannten Grenzen liegende Werte als Grenzwerte offenbart gelten und in beliebiger Kombination beanspruchbar sein.

Erfindungsgemäß vorgesehen ist eine Röstvorrichtung, aufweisend eine Trommel zur Aufnahme von Röstgut, mindestens einen elektrischen Heizstab zur Röstung des Röstguts und eine Antriebseinrichtung zur Drehung der Trommel.

Die Trommel wird um eine Drehachse gedreht, wobei die Drehachse bevorzugt mit einer Längsachse der Trommel zusammenfällt, insbesondere verläuft die Drehachse deckungsgleich mit einer Symmetrieachse der Trommel. Bevorzugt verläuft die Drehachse im Betrieb horizontal.

Die erfindungsgemäße Röstvorrichtung ist vorteilhaft mobil, da sie in kleinen Abmessungen herstellbar und nur geringes Gewicht aufweist ist. Sie kann bevorzugt eine Länge von 20-50 cm haben und eine Breite von 10-30 cm. Die Höhe beträgt nicht mehr als 10-30 cm.

Dadurch kann die Röstvorrichtung bequem im Haushalt benutzt werden und beispielsweise auf einen Tisch oder eine Arbeitsplatte gestellt werden. Da die Hitze effizient genutzt wird, kann die Röstvorrichtung gefahrlos im Privathaushalt benutzt werden. Eine unerwünschte starke Erhitzung der Röstvorrichtung kann verhindert werden.

Da die Röstvorrichtung elektrisch beheizt werden kann, ist sie einfach an den Haushaltsstrom anzuschließen und kann überall dort benutzt werden, wo elektrischer Strom zur Verfügung steht.

Das Röstgut umfasst z.B. Nüsse, Mandeln oder ähnliche röstbare Lebensmittel. Die Füllmenge beträgt bevorzugt weniger als 300g.

Der mindestens eine elektrische Heizstab erzeugt genügend Wärme, um das Röstgut gleichmäßig zu rösten. Die Zeit für eine ausreichende Röstung beträgt lediglich wenige Minuten.

Die Antriebseinrichtung arbeitet bevorzugt elektrisch und kann dadurch von der gleichen Stromquelle wie der mindestens eine elektrische Heizstab betrieben werden. Beispielsweise wird ein Elektromotor zur Drehung der Trommel verwendet.

Die Trommel ist hohl ausgebildet und weist eine Mantelfläche und zwei Stirnseiten auf, die die Mantelfläche begrenzen. Die Trommel ist um eine Drehachse drehbar, wobei die Drehachse bevorzugt mit der Längsachse der Trommel identisch ist.

Der mindestens eine Heizstab ist bevorzugt in einem Abstand von 5-30 mm von der Mantelfläche der Trommel angeordnet. Dadurch kann vorteilhaft eine relativ schnelle Röstung erfolgen und ein Verbrennen des Röstguts wird verhindert.

Der mindestens eine Heizstab erstreckt sich bevorzugt entlang mehr als 50% der Länge der Trommel, bevorzugt mehr als 60%, weiter bevorzugt mehr als 70%, noch weiter bevorzugt mehr als 80% und am meisten bevorzugt mehr als 90%. Hierdurch kann vorteilhaft eine gleichmäßige Röstung des Röstguts erfolgen.

Bevorzugt ist der Abstand des mindestens einen Heizstabs von der Trommel über die Länge des Heizstabs konstant, sodass vorteilhaft eine gleichmäßige Röstung des Röstguts erfolgen kann.

In einer bevorzugten Ausführungsform weist die Röstvorrichtung mehrere Heizstäbe auf, wobei die Heizstäbe auf gegenüberliegenden Seiten der Trommel angeordnet sind, wobei bevorzugt auf jeder Seite mindestens ein Heizstab angeordnet ist, wobei weiter bevorzugt auf jeder Seite mindestens zwei Heizstäbe angeordnet sind. Dadurch kann vorteilhaft eine besonders gleichmäßige Röstung erreicht werden, da beide Seiten der Trommel beheizt werden.

Die mindestens zwei Heizstäbe sind bevorzugt vertikal übereinander angeordnet, sodass vorteilhaft eine gleichmäßige Röstung des Röstguts erfolgen kann. Weiter bevorzugt sind die mindestens zwei Heizstäbe im gleichen Abstand von der Trommel angeordnet.

Die mindestens zwei Heizstäbe sind bevorzugt parallel übereinander angeordnet, sodass vorteilhaft eine gleichmäßige Röstung des Röstguts erfolgen kann.

In einer anderen bevorzugten Ausführungsform weist die Röstvorrichtung mehrere Heizstäbe auf, wobei die Heizstäbe unter der Trommel angeordnet sind. Bevorzugt sind die Heizstäbe im gleichen Abstand von der Trommel angeordnet. Weiter bevorzugt sind die Heizstäbe parallel zueinander angeordnet. Weiter bevorzugt sind die Heizstäbe parallel zur Drehachse der Trommel angeordnet.

In einer bevorzugten Ausführungsform ist die Trommel als hohler Kreiszylinder ausgebildet, wobei die Drehachse der Trommel mit der Symmetrieachse des Kreiszylinders zusammenfällt.

Bevorzugt ist die längliche Erstreckung der Trommel größer als die Breite der Trommel.

In einer anderen bevorzugten Ausführungsform ist die Trommel im Betrieb um eine waagerechte Drehachse drehbar ist. Dadurch kann vorteilhaft eine besonders gleichmäßige Röstung erreicht werden, da das Röstgut sich gleichmäßig innerhalb der Trommel verteilen kann.

In einer anderen bevorzugten Ausführungsform ist die Trommel zur Beladung mit Röstgut aus der Röstvorrichtung entnehmbar. Dadurch kann eine besonders bequeme Beladung der Trommel erfolgen.

Gemäß einer alternativen beispielhaften Ausführungsform kann die Beladung der Trommel mit Röstgut ohne Entnahme der Trommel erfolgen. Hierzu weist die Trommel eine Klappe auf, die zur Beladung mit Röstgut geöffnet und danach wieder verschlossen werden kann. Nach der Röstung des Röstguts wird die Klappe geöffnet und die Trommel wird derart gedreht, dass das Röstgut nach unten in eine Auffangschale fällt. Die Auffangschale wird dann durch den Bediener benommen, so dass das Röstgut entnommen werden kann.

In einer anderen bevorzugten Ausführungsform ist die Trommel mit einer offenen Seite, insbesondere mit einer offenen Stirnseite, in einer Halterung der Antriebseinrichtung befestigbar. So kann vorteilhaft besonders einfach die Trommel an der offenen Seite mit Röstgut befüllt werden. Die offene Seite wird in der Halterung befestigt und dadurch verschlossen, sodass einerseits eine besonders effiziente Befestigung der Trommel möglich ist und andererseits kein Röstgut während der Drehung aus der Trommel fallen kann. Zudem muss keine Beladeöffnung in der Mantelfläche der Trommel angeordnet werden, wodurch sich die Beladung erheblich vereinfacht.

Die Halterung ist durch die Antriebseinrichtung drehbar und überträgt die Drehung auf die Trommel. Die Trommel wird bevorzugt mit einem Ende der Drehachse in eine Aufnahme der Halterung gesteckt, wodurch sich eine formschlüssige Verbindung ergibt, sodass die Drehung der Aufnahme auf das Ende übertragbar ist.

Zur Entnahme der Trommel kann das Ende aus der Aufnahme herausgezogen werden.

In einer anderen bevorzugten Ausführungsform weist die Trommel eine Stirnseite auf, die durch eine Klappe zumindest bereichsweise geschlossen und geöffnet werden kann. Bevorzugt ist ein Teil der Stirnseite durch einen Deckel verschlossen und der übrige Teil der Stirnseite kann durch die Klappe geschlossen und geöffnet werden. Weiter bevorzugt verschließt der Deckel etwa 50 % der Fläche der Stirnseite und die Klappe verschließt die etwa übrigen 50 % der Fläche der Stirnseite. Vorteilhaft verhindern der Deckel und die Klappe ein Herausfallen des Röstgutes aus der Trommel. Durch die Klappe ist das Einfüllen des Röstgutes und die Entnahme des Röstgutes möglich.

Bevorzugt weist die Röstvorrichtung eine Betätigungseinrichtung zur Öffnung und Schließung der Klappe auf. Die Betätigungseinrichtung ist über ein Gestänge durch den Bediener insbesondere mit der Hand und/oder einem Finger betätigbar. So kann vorteilhaft der Bediener die Klappe zur Beladung öffnen und nach der Beladung wieder schließen. Insbesondere ist bevorzugt vorgesehen, dass die Klappe beziehungsweise die Betätigungseinrichtung derart vorgespannt ist, dass die Klappe durch die Vorspannung, insbesondere durch eine Feder, in der geschlossenen Position gehalten wird. Vorteilhaft kann dadurch das Herausfallen des Röstgutes verhindert werden und nur bei der gewünschten Beladung der Trommel wird durch den Bediener die Klappe geöffnet.

Bevorzugt ist ein Schieber am Griff der Trommel angeordnet, so dass der Bediener vorteilhaft besonders einfach den Schieber und über das Gestänge die Betätigungseinrichtung bedienen kann. So kann der Bediener den Schieber in Richtung der Trommel schieben, um die Klappe zu öffnen.

In einer anderen bevorzugten Ausführungsform wird die Antriebskraft im Bereich des Griffs der Trommel übertragen. Bevorzugt ist an einer Stange an der Trommel ein Zahnrad vorgesehen, welches mit der Antriebseinrichtung zusammenwirkt, welche im Bereich des Griffs angeordnet ist.

Hierzu ist beispielhaft ein Zahnrad jeweils am Griff, insbesondere an einer Stange der Trommel, und an der Antriebseinrichtungen angeordnet, die die Kraftübertragung ermöglichen. In dieser Ausführungsform ist die Antriebseinrichtung im Bereich des Griffs angeordnet. Insbesondere ist es vorgesehen, dass bei der Entnahme der Trommel der Griff aus der Antriebseinrichtung herausgehoben wird und beim Einsetzen der Trommel beziehungsweise des Handgriffs der Handgriff in die Antriebseinrichtung eingesetzt wird.

In einer anderen bevorzugten Ausführungsform ist die Trommel im Betrieb mit einer Drehgeschwindigkeit zwischen 10 Umdrehungen pro Minute und 100 Umdrehungen pro Minute antreibbar ist, bevorzugt zwischen 10 und 50 Umdrehungen pro Minute, weiter bevorzugt zwischen 10 und 40 Umdrehungen pro Minute, besonders bevorzugt zwischen 20 und 30 Umdrehungen pro Minute. Hierdurch kann vorteilhaft in besonders kurzer Zeit eine gleichmäßige Röstung erreicht werden.

Die Trommel ist im und/oder gegen den Uhrzeigersinn antreibbar.

In einer anderen bevorzugten Ausführungsform ist die Trommel im Betrieb abwechselnd im Uhrzeigersinn und gegen den Uhrzeigersinn antreibbar ist. Durch diese gegenläufige Antriebsmöglichkeit kann in besonders kurzer Zeit eine gleichmäßige Röstung erreicht werden. So kann beispielsweise die Trommel 10-20 sec im Uhrzeigersinn und danach 1-20 sec gegen den Uhrzeigersinn gedreht werden, danach wieder 10-20s sec im Uhrzeigersinn usw.

In einer anderen bevorzugten Ausführungsform ist vorgesehen, dass die Trommel in ihrer dem mindestens einen Heizstab zugewandten Oberfläche (auch Mantelfläche genannt) eine Vielzahl an Öffnungen aufweist. Durch die Öffnungen kann die Wärme besonders effizient das Röstgut erreichen, sodass eine schnelle Röstung möglich ist. Bevorzugt sind die Öffnungen kleiner als das Röstgut, sodass das Röstgut nicht durchfallen kann.

In einer bevorzugten Ausführungsform sind bestimmte Heizzonen einstellbar. Weiterhin kann bevorzugt die Drehgeschwindigkeit, die Röstdauer und/oder die Temperatur eingestellt werden.

Hierzu weist die Röstvorrichtung bevorzugt eine Steuerungseinrichtung auf. Dabei kann es sich um einen durch den Bediener zu betätigenden Knopf, insbesondere einen, beispielsweise drehbaren, Knopf zur Einstellung der Röstdauer, oder Schieber handeln. Alternativ oder zusätzlich kann die Steuerung auch über eine Software erfolgen, die durch eine Anwendung auf einem Smartphone o.ä. gesteuert werden kann.

In einer anderen bevorzugten Ausführungsform ist vorgesehen, dass die Röstvorrichtung eine Lesevorrichtung aufweist und/oder mit einer Lesevorrichtung verbindbar ist. Die Lesevorrichtung ist bevorzugt ein Scanner. Die Lesevorrichtung ist derart ausgebildet, dass ein Code, bevorzugt ein QR Code, auf einer Verpackung des Röstguts lesbar ist. Dadurch erhält die Röstvorrichtung Informationen über die erforderliche Röstdauer, die automatisch einstellbar ist. Dadurch ist eine automatische Einstellung der optimalen Röstdauer möglich.

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen schematisch in:
Figur 1 eine erfindungsgemäße Röstvorrichtung in einer ersten Ausführungsform in einer Draufsicht,
Figur 2 die Röstvorrichtung in einer perspektivischen Ansicht seitlich von oben,
Figur 3 die Röstvorrichtung in einer perspektivischen Ansicht von einer Stirnseite,
Figur 4 die Trommel der Röstvorrichtung von oben,
Figur 5 die Trommel von der offenen Stirnseite aus,
Figur 6 die Röstvorrichtung ohne Trommel,
Figur 7 eine erfindungsgemäße Röstvorrichtung in einer zweiten Ausführungsform in einer Draufsicht ohne Trommel,
Figur 8 die Trommel der Röstvorrichtung aus Figur 7 in einer Rückansicht und
Figur 9 die Trommel aus Figur 8 in einer Vorderansicht.

In den Figuren sind Bauteile mit gleicher oder ähnlicher Funktion mit den gleichen Bezugszeichen gekennzeichnet.

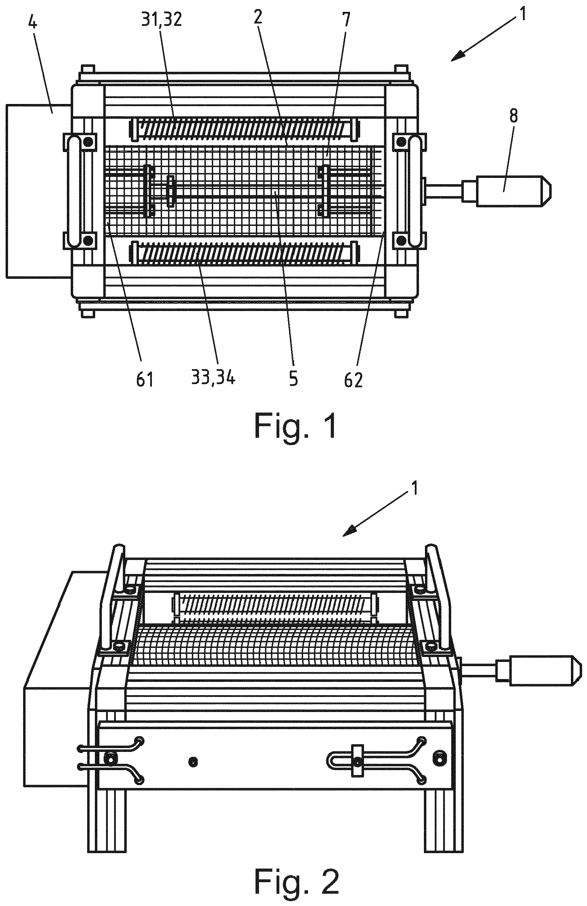

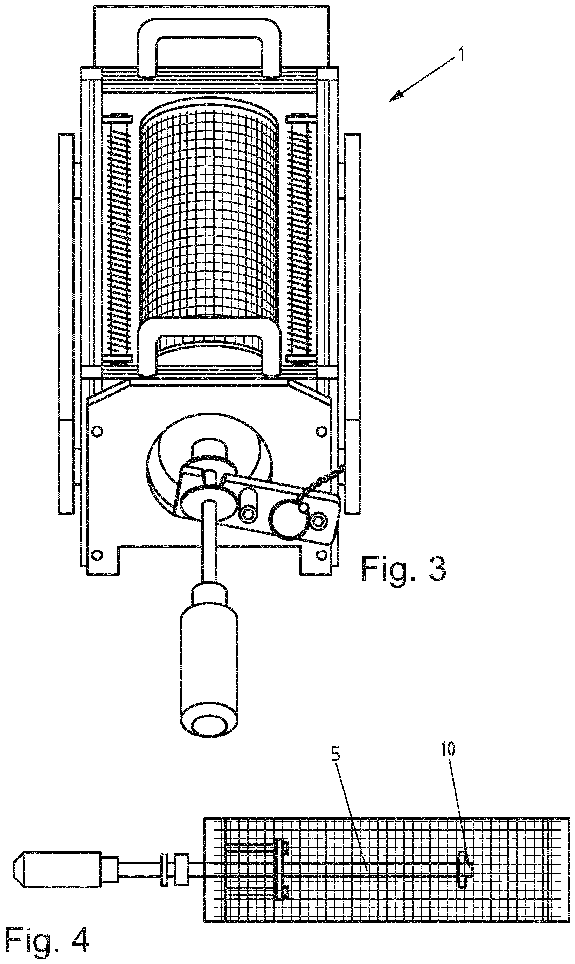

Figur 1 zeigt eine erfindungsgemäße Röstvorrichtung 1 in einer ersten Ausführungsform in einer Draufsicht, Figuren 2 und 3 zeigen die Röstvorrichtung 1 in perspektivischen Ansichten. Die Röstvorrichtung 1 weist auf eine um eine Drehachse 5 drehbare Trommel 2, vier elektrische Heizstäbe 31,32,33,34, und eine als Elektromotor ausgebildete Antriebseinrichtung 4.

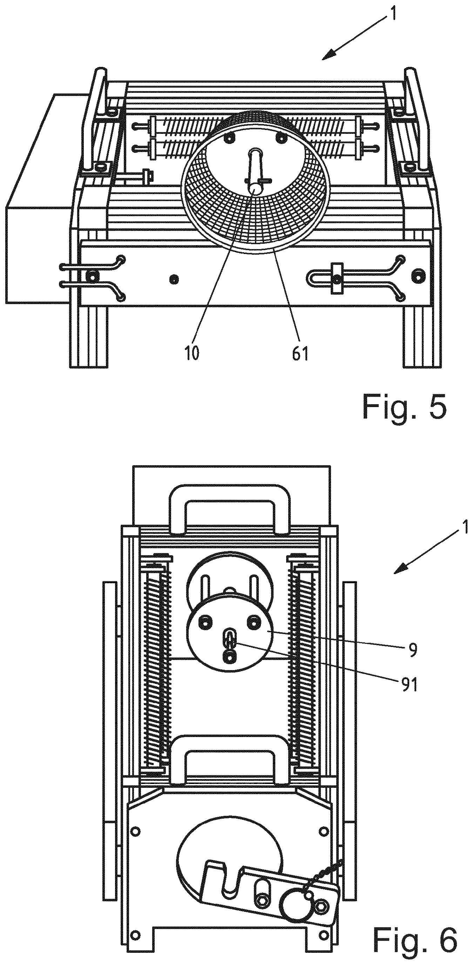

Röstgut wird in die Trommel 2 eingefüllt. Hierzu weist die als hohler Kreiszylinder ausgebildete Trommel 2 eine offene Stirnseite 61 auf (Fig. 4,5). Die andere Stirnseite 61 der Trommel 2 ist geschlossen. Die Trommel 2 weist auf ihrer Mantelfläche eine Vielzahl von Öffnungen 7 von 1-10 mm Größe auf. Die Öffnungen sind so klein, dass das Röstgut nicht herausfallen kann, aber groß genug, dass die Wärme der Heizstäbe 31,32,33,34 das Röstgut erreichen kann.

An der Trommel 2 ist ein Griff 8 angeordnet, mit dem die Trommel 2 aus der Röstvorrichtung 1 entnommen werden kann. Nach Entnahme der Trommel 2 kann Röstgut eingefüllt werden und/oder eine Reinigung der Trommel 2 erfolgen.

Im Betrieb ist die Drehachse 5 der Trommel 2 horizontal angeordnet. Die Trommel 2 dreht sich um ihre Drehachse 5, während die Heizstäbe 31,32,33,34 das Röstgut in der Trommel 2 beheizen. Die Trommel 2 dreht sich mit einer Drehgeschwindigkeit zwischen 20 Umdrehungen pro Minute und 100 Umdrehungen pro Minute.

Die Heizstäbe 31,32,33,34 sind in einem Abstand von 5-30 mm von der Mantelfläche der Trommel 2 angeordnet. Auf jeder Seite der Trommel 2 befinden sich 2 Heizstäbe, nämlich auf der einen Seite Trommel 2 die Heizstäbe 31, 32 und auf der gegenüberliegenden Seite die Heizstäbe 33, 34. Die Heizstäbe 31, 32 bzw. 33, 34 sind vertikal übereinander angeordnet, sodass eine ausreichend große Wärme erzeugt werden kann. Der Heizstab 33 verdeckt den darunter angeordneten Heizstab 34 in den Figuren.

Die Heizstäbe 31,32,33,34 erstrecken sich über fast die gesamte Länge der Trommel 2. Hierbei erstrecken sind die Heizstäbe 31,32,33,34 über mehr als 80% der Länge der Trommel 2.

Figur 6 zeigt die Röstvorrichtung 1 ohne Trommel 2. Die Röstvorrichtung 1 weist eine Halterung 9 für die Trommel 2 auf. Die Halterung 9 ist durch die Antriebseinrichtung 4 drehbar und überträgt die Drehung auf die Trommel 2. Die Trommel 2 wird mit einem Ende 51 der Drehachse 5 in eine Aufnahme 91 der Halterung 9 gesteckt, wodurch sich eine formschlüssige Verbindung ergibt, sodass die Drehung der Aufnahme 91 auf das Ende 51 übertragen werden kann.

Zur Entnahme der Trommel 2 kann das Ende 51 aus der Aufnahme 91 herausgezogen werden.

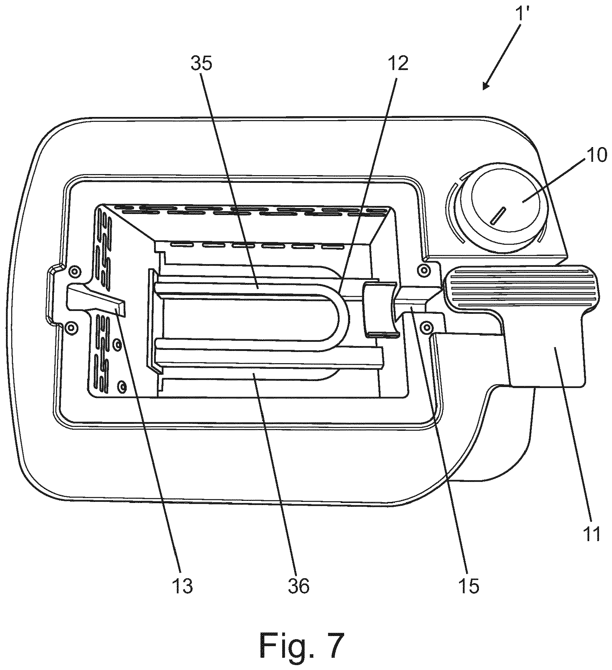

Figur 7 zeigt eine erfindungsgemäße Röstvorrichtung 1' gemäß einer zweiten erfindungsgemäßen Ausführungsform. In dieser Ausführungsform wird die Röstdauer in Minuten mit einem Drehknopf 10 eingestellt. In diesem Beispiel kann eine Dauer von bis zu 15 Minuten eingestellt werden. Dadurch kann der optimale Röstgrad des Röstgutes eingestellt werden.

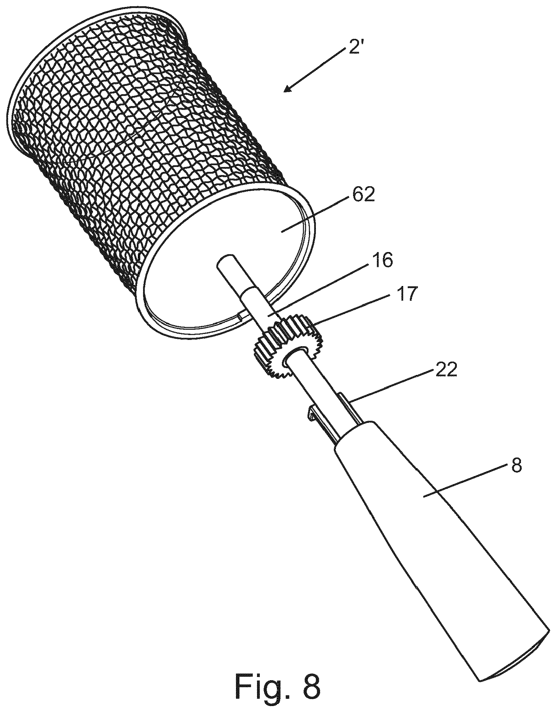

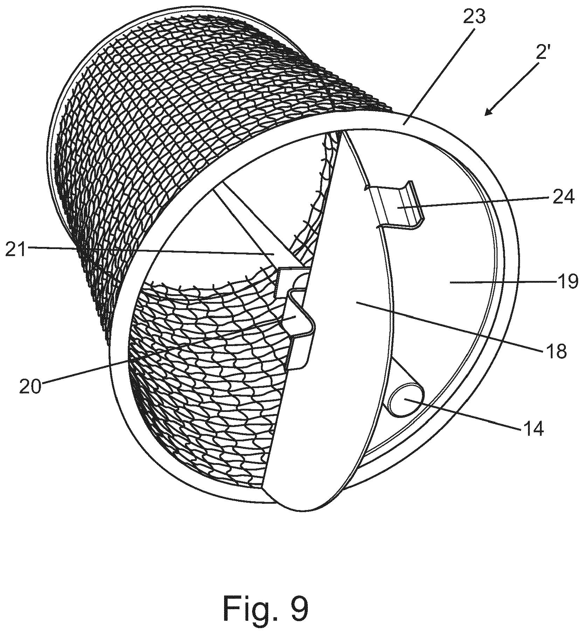

Die Figur 7 zeigt die Röstvorrichtung 1' ohne Trommel 2'. Die Figur 8 zeigt die entnommene Trommel 2' in einer Rückansicht und die Figur 9 die Trommel 2' in einer Vorderansicht.

Die Trommel 2' kann entnommen werden, indem ein Hebel 11 nach oben verschwenkt wird, um die Trommel 2' nach oben zu entnehmen.

Die Röstvorrichtung 1' weist zwei Heizstäbe 35, 36 auf. Die beiden Heizstäbe 35, 36 sind in dieser zweiten Ausführungsform unter der Trommel 2' angeordnet. Die beiden Heizstäbe 35, 36 verlaufen parallel zueinander und erstrecken sich im Wesentlichen über die gesamte Länge der Trommel 2'. An einem Ende der Heizstäbe 35, 36, das dem Hebel 11 zugewandt ist, sind die beiden Heizstäbe 35, 36 über ein U-förmiges Verbindungsstück 12 miteinander verbunden. Die Trommel 2' wird mit einem Zapfen 14 in einer Aufnahme 13 platziert.

Im Betrieb befindet sich die Trommel 2' wie auch in der ersten Ausführungsform in einer horizontalen Lage in der Röstvorrichtung 1' und dreht sich um eine Drehachse, die horizontal verläuft. Dabei liegt die Trommel 2' drehbar gelagert mit ihrem Vorderende und dem Zapfen 14 einerseits in der Halterung 13 auf und andererseits auf ihrer Rückseite mit einer Stange 16 in einer Halterung 15 auf.

Im Gegensatz zur ersten Ausführungsform befindet sich die Antriebseinrichtung der Röstvorrichtung im hinteren Bereich, nämlich im Bereich des Griffs 8. Hierzu ist zwischen der Trommel 2 ' und dem Griff 8 ein Zahnrad 17 angeordnet. Das Zahnrad 17 greift in ein nicht dargestelltes Zahnrad der nicht dargestellten Antriebseinrichtung ein, wodurch die Antriebsbewegung der Antriebseinrichtung über das Zahnrad 17 auf die Stange 16 und die Trommel 2' übertragen wird, um die Trommel 2' zu drehen.

Im Gegensatz zur ersten Ausführungsform ist die Stirnseite 23 der Trommel 2' nicht offen, sondern durch eine Klappe 18 verschließbar. Die Klappe 18 verschließt ungefähr die Hälfte der Fläche der Stirnseite. Die andere Hälfte ist permanent durch einen Deckel 19 verschlossen. Bei Bedarf kann die Klappe 18 durch den Bediener geöffnet und geschlossen werden. So kann zur Beladung mit Röstgut beziehungsweise zur Entladung des Röstguts die Klappe 18 geöffnet werden. Die Klappe 18 ist durch eine Feder derart vorgespannt, dass sich die Klappe 18 selbsttätig schließt. Über ein Gestänge 21 und eine Betätigungseinrichtung 20 wird die Klappe 18 durch den Bediener nach außen gegen die Federkraft gedrückt.

Zur Öffnung der Klappe betätigt der Bediener mit einem Finger einen Schieber 22, der sich zwischen dem Zahnrad 17 und dem Griff 8 an der Stange 16 befindet. Der Schieber 22 wird nach vorne geschoben, wodurch sich die Kraft über das Gestänge 21 und die Betätigungseinrichtung 20 auf die Klappe 18 überträgt und wodurch die Klappe 18 nach außen gegen die Federkraft geöffnet wird. Lässt der Bediener den Schieber 22 los, so sorgt die Federkraft dafür, dass die Klappe 18 wieder in die geschlossene Position zurückkehrt. Eine Lasche 24 hält die Klappe 18 in der geschlossenen Position, Dadurch kann im Betrieb bei der Drehung der Trommel 2' kein Röstgut aus der Trommel 2' fallen.

Im Übrigen wird auf die Ausführungen zur ersten Ausführungsformen in den Figuren 1-6 verwiesen.

Bezugszeichen
- 1,1': Röstvorrichtung
- 2,2': Trommel
- 31,32,33,34,35,36: Heizstäbe
- 4: Antriebseinrichtung
- 5: Drehachse
- 51: Ende der Drehachse
- 61: offene Stirnseite
- 62: geschlossene Stirnseite
- 7: Öffnungen in Trommel
- 8: Griff
- 9: Halterung
- 91: Aufnahme
- 10: Drehknopf
- 11: Hebel
- 12: Verbindungsstück
- 13: Aufnahme
- 14: Zapfen
- 15: Halterung
- 16: Stange
- 17: Zahnrad
- 18: Klappe
- 19: Deckel
- 20: Betätigungseinrichtung
- 21: Gestänge
- 22: Schieber
- 23: Stirnseite mit Klappe
- 24: Lasche

## Patentansprüche

1. Röstvorrichtung (1,1'), aufweisend eine Trommel (2,2') zur Aufnahme von Röstgut, mindestens einen elektrischen Heizstab (31, 32, 33, 34, 35, 36) zur Röstung des Röstguts und eine Antriebseinrichtung (4) zur Drehung der Trommel (2,2').

2. Röstvorrichtung (1) nach Anspruch 1, aufweisend mehrere Heizstäbe (31, 32, 33, 34), wobei die Heizstäbe (31, 32, 33, 34) auf gegenüberliegenden Seiten der Trommel (2) angeordnet sind, wobei bevorzugt auf jeder Seite mindestens ein Heizstab (31, 32, 33, 34) angeordnet ist, wobei weiter bevorzugt auf jeder Seite mindestens zwei Heizstäbe (31, 32, 33, 34) angeordnet sind.

3. Röstvorrichtung (1,1') nach mindestens einem der vorhergehenden Ansprüche, wobei die Trommel (2,2') im Betrieb um eine waagerechte Drehachse (5) drehbar ist.

4. Röstvorrichtung (1,1') nach mindestens einem der vorhergehenden Ansprüche, wobei die Trommel (2,2') zur Beladung mit Röstgut aus der Röstvorrichtung (1,1') entnehmbar ist.

5. Röstvorrichtung (1) nach mindestens einem der vorhergehenden Ansprüche, wobei die Trommel (2) eine offene Seite (61), insbesondere eine offene Stirnseite (61), zur Beladung mit Röstgut aufweist.

6. Röstvorrichtung (1) nach mindestens einem der vorhergehenden Ansprüche, wobei die Trommel (2) mit einer offenen Seite (61), insbesondere mit einer offenen Stirnseite (61), in einer Halterung (9) der Antriebseinrichtung (4) befestigbar ist.

7. Röstvorrichtung (1,1') nach mindestens einem der vorhergehenden Ansprüche, wobei die Trommel (2,2') im Betrieb mit einer Drehgeschwindigkeit zwischen 10 Umdrehungen pro Minute und 100 Umdrehungen pro Minute antreibbar ist, bevorzugt zwischen 10 und 50 Umdrehungen pro Minute, weiter bevorzugt zwischen 10 und 40 Umdrehungen pro Minute, besonders bevorzugt zwischen 20 und 30 Umdrehungen pro Minute.

8. Röstvorrichtung (1,1') nach mindestens einem der vorhergehenden Ansprüche, wobei die Trommel (2,2') im Betrieb abwechselnd im Uhrzeigersinn und gegen den Uhrzeigersinn antreibbar ist.

9. Röstvorrichtung (1,1') nach mindestens einem der vorhergehenden Ansprüche, wobei die Trommel (2,2') in ihrer dem mindestens einen Heizstab (31, 32, 33, 34, 35, 36) zugewandten Oberfläche eine Vielzahl an Öffnungen (7) aufweist.

10. Röstvorrichtung (1,1') nach mindestens einem der vorhergehenden Ansprüche, wobei eine Stirnseite (23) mit einer Klappe (18) versehen ist, wobei die Klappe (18) durch einen Finger eines Bedieners betätigbar ist.

11. Röstvorrichtung (1,1') nach Anspruch 10, wobei die Stirnseite (23) einen Deckel (19) aufweist, der die Stirnseite (23) teilweise verschließt und der übrige Teil der Stirnseite durch die Klappe (18) verschließbar und öffenbar ist.

12. Röstvorrichtung (1,1') nach Anspruch 10 oder 11, wobei die Klappe (18) durch einen Schieber (22) im Bereich des Griffs (8) betätigbar ist.

13. Röstvorrichtung (1,1') nach mindestens einem der vorhergehenden Ansprüche, wobei die Antriebseinrichtung im Bereich eines Griffs (8) der Trommel (2') angeordnet ist.

14. Röstvorrichtung nach Anspruch 13, wobei die Trommel (2') eine Stange (16) aufweist, wobei an der Stange (16) ein Zahnrad (17) angeordnet ist, wobei das Zahnrad (17) mit der Antriebseinrichtung zusammenwirkt.
